Europäisches Patentamt

European Patent Office

Office européen des brevets

⑩

(11) Publication number: **0 125 750**
**B1**

(12) **EUROPEAN PATENT SPECIFICATION**

(45) Date of publication of patent specification: **16.01.91**

(21) Application number: **84301226.1**

(22) Date of filing: **24.02.84**

(51) Int. Cl.⁵: **A 47 J 37/12**

(54) **High efficiency frying apparatus with supercharged burning system.**

(30) Priority: **13.05.83 US 494163**

(43) Date of publication of application:
**21.11.84 Bulletin 84/47**

(45) Publication of the grant of the patent:
**16.01.91 Bulletin 91/03**

(84) Designated Contracting States:
**BE DE FR GB IT NL SE**

(56) References cited:
**GB-A-2 098 856**

(73) Proprietor: **The Frymaster Corporation
5000 Hollywood Avenue
Shreveport Louisiana 71108 (US)**

(72) Inventor: **Brewer, Edward Lewis
6212 Nottaway Drive
Shreveport Louisiana 71119 (US)**

(74) Representative: **Colgan, Stephen James et al
CARPMAELS & RANSFORD 43 Bloomsbury
Square
London WC1A 2RA (GB)**

Courier Press, Leamington Spa, England.

## Description

The present invention pertains to a deep fat frying apparatus having a frypot assembly with improved heat transfer surfaces for absorbing heat from burner combustion gases and a forced air supercharged burner system for increasing the heat input to the frypot.

In the art of frying apparatus comprising a vat or frypot in which a quantity of cooking oil is heated for so called deep fat frying, there are several problems which are of longstanding, particularly, with respect to apparatus used for commercial cooking operations. Deep fat frying apparatus used in restaurants, including so called fast food dispensers, must be capable of rapid warmup time, a uniform temperature of the cooking oil, and maintenance of the cooking oil at a desired temperature when relatively large loads of raw foodstuffs are placed in the frypot. The ever increasing cost of hydrocarbon fuels such as natural gas and liquefied petroleum gases has also placed high emphasis on improving the thermal efficiency of commercial cooking apparatus which use relatively large amounts of these fuels.

Although various designs of cooking vats or so called frypots have been developed in an effort to improve the rate of heating the cooking oil and to improve the distribution of heat to maintain a uniform temperature of the oil, the emphasis of the fast preparation of fast food wherein relatively large quantities of frozen foodstuffs are cooked rapidly has caused several problems in the development of deep fat fryers. In this regard, it has been deemed desirable to provide for increasing the heating capacity of the burner systems for fryers so that relatively large quantities of foods may be cooked in a relatively short time period and with proper control of the oil temperature to provide palatable foods cooked by this type of apparatus.

Along with the requirements for increased heating capacity of deep fat frying apparatus, the rapidly escalating cost of heating fuel has also made it highly desirable to increase the thermal efficiency of extracting the heat from the combustion gases to reduce fuel usage as much as possible. In this regard, the present invention provides several improved features in deep fat frying apparatus of the type wherein a frypot or vat is heated by a gas flame or gaseous combustion system. The abovementioned desiderata in the art of deep fat frying apparatus have been realized with an apparatus having a supercharged or forced air combustion system and improved structure for heat transfer from the combustion gases to the cooking oil contained in the frypot.

In GB-A-2098856 is disclosed a fryer apparatus for cooking food comprising:

a frypot comprising a relatively thin-walled metal container including sidewalls, endwalls and a bottom wall defining an interior chamber for a quantity of cooking oil;

enclosed combustion chambers defined in part by lower wall portions of said frypot;

enclosed heat exchange flow passages including parts of upper wall portions of said frypot for receiving combustion gases and for conducting said combustion gases toward an exhaust outlet; and

charging means for providing a superatmospheric charge of combustion air to said combustion chambers including an air blower and conduits for conducting a pressurized fuel/air mixture to said combustion chambers for combustion therein and to control heat generated and transferred to said cooking oil through said walls by maintaining a forced combustion air flow to said combustion chambers and a forced flow of combustion gases through said flow passages.

The present invention (claim 1) is characterised in that said upper wall portion is provided with a series of somewhat L-shaped plate-like fins or vanes, said vanes being arranged substantially parallel to each other to provide respective flow channels therebetween and all being angled from the front of the frypot towards the rear with respect to the planes of the frypot front and rear walls, said upper wall portion further including an L-shaped vane extending horizontally above said vanes, said angled vanes and said horizontal vane being arranged to redirect approximately half of the flow issuing from said flow channels towards the front of the frypot, where its direction is reversed and it flows behind the vane towards the rear exhaust outlet, and half of the flow towards the rear and also to the exhaust outlet, the combination of these guide vanes ensuring that the turbulence and retention time of said combustion gases is increased.

From another aspect (claim 16) the invention relates to a burner assembly for a gas fired fryer apparatus comprising:

a housing forming an inlet chamber, said housing including an inlet conduit opening into said inlet chamber for conducting a flow of a combustion air/fuel gas mixture into said inlet chamber; characterised by

a flow distribution plate disposed in said housing and dividing the interior of said housing into said inlet chamber and opposed distribution chambers, a plurality of flow distributing ports formed in said distribution plate for conducting said combustion air-gas mixture from said inlet chamber to said distribution chambers; and by

a foraminous burner plate closing one side of said housing and forming a wall of said distribution chambers for conducting said combustion air-gas mixture to a combustion chamber to support a substantially planar flame front adjacent to a heat transfer surface of said fryer apparatus.

A burner assembly according to the prior art portion of claim 16 is known from GB—A—2 098 856. Particular embodiments of the invention are set out in dependent claims 2 to 15 and 17.

The provision of a frying apparatus with improved heating rate and total heat input as well as high thermal efficiency will be further appreciated by those skilled in the art upon reading the detailed description which follows herein. The advantages of the invention will also become apparent.

Brief Description of the Drawings

Figure 1 is a perspective view of a deep fat fryer type cooking apparatus in accordance with the present invention;

Figure 2 is a side elevation of the fryer apparatus hawing portions of the outer cabinet and the frypot assembly broken away to show details of the frypot assembly;

Figure 3 is a front elevation of the frypot assembly;

Figure 4 is a section view taken generally along the line 4-4 of Figure 2;

Figure 5 is a detail section view on a larger scale of the area generally within the circle shown on Figure 4;

Figure 6 is a detail exploded perspective view of the charging air blower and manifold;

Figure 7 is an exploded perspective view of one of the burner assemblies;

Figure 8 is a detail section view taken along the line 8-8 of Figure 4;

Figure 9 is a rear elevation, partially broken away, of the frypot assembly;

Figure 10 is a side elevation of one of the burner distribution plates;

Figure 11 is a perspective view of a dual cooking chamber frypot;

Figure 12 is a front elevation view of a frying apparatus with the frypot of Figure 11; and

Figure 13 is a detail section view taken along the line 13-13 of Figure 2.

Detailed Description of the Preferred Embodiments

In the description which follows like parts are marked throughout the specification and drawings with the same reference numerals, respectively. The drawings are not necessarily to scale and certain features of the invention may be shown exaggerated in scale or in somewhat schematic form in the interest of clarity and conciseness.

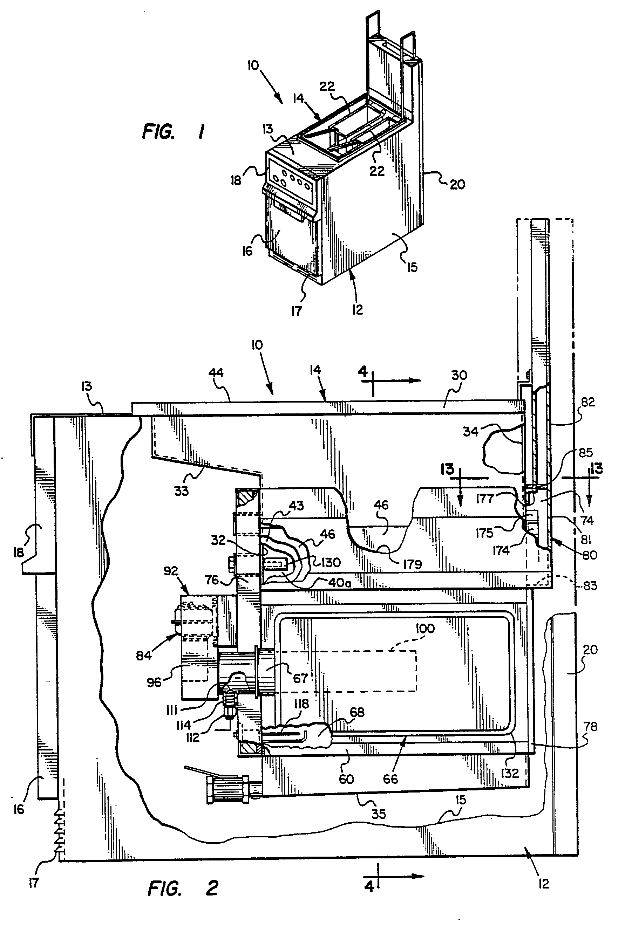

Referring to Figure 1, there is illustrated a cooking apparatus of the type particularly adapted for so called deep fat frying, The apparatus illustrated is generally designated by the numeral 10 and is of a type used for commercial cooking purposes such as in fast food restaurants and other food service establishments. The apparatus 10 includes a generally rectangular uninsulated metal cabinet 12 forming an enclosure for a frypot assembly 14. The frypot assembly 14 is adapted to be removably inserted in the cabinet 12 and suitably supported by a top wall 13. The cabinet 12 also includes opposed sidewalls 15, one shown in Figure 1, and a front panel 16 which is hinged for access to controls and other apparatus associated with the frypot assembly to be further described herein. The apparatus 10 also includes a suitable control panel 18 forming part of the front wall of the cabinet 12 and including suitable temperature and time controls for use in controlling the apparatus 10 in cooking various foodstuffs. The cabinet 12 also includes a backwall assembly 20 including suitable mechanism for raising and lowering one or more cooking baskets 22 shown disposed partially elevated out of the frypot assembly 14. A louvered air inlet grille 17 may be provided as part of the front panel 16.

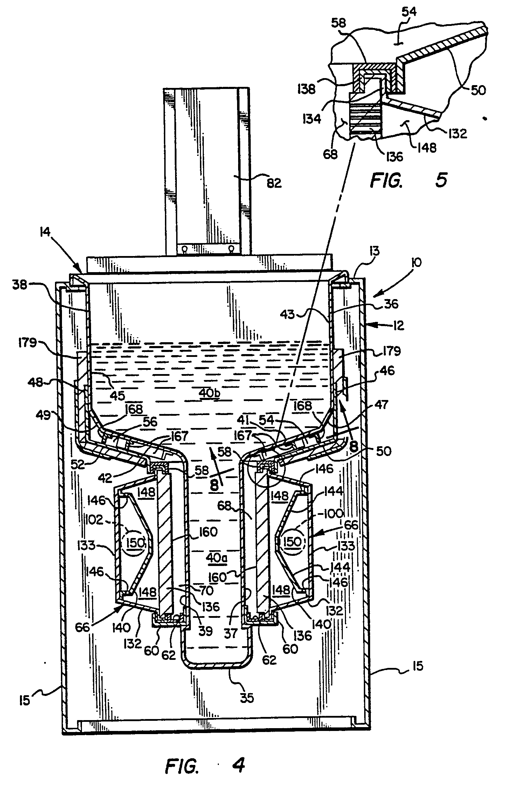

Referring now to Figures 2 and 4, the frypot assembly 14 includes a unitary stainless sheet steel vat type frypot 30 including respective front and rear endwalls 32 and 34 and opposed sidewalls 36 and 38 forming an interior smooth walled chamber 40a, 40b. The sidewalls 36 and 38, Figure 4, include lower vertical portions 37 and 39 forming, with a bottom wall portion 35, the relatively narrow deep well portion 40a of the frypot, the bottom of which forms a cold zone to minimize circulation of cooking debris. The sidewalls 36 and 38 flare outwardly and slope upwardly at portions 41 and 42 to join the vertical sidewall portions 37 and 39 with further spaced apart upper sidewall portions 43 and 45, as shown, to form the main interior cooking chamber portion 40b. The configuration of the central deepwell chamber portion 40b and the sloping upper sidewalls 41 and 42 provides a superior cooking chamber shape for circulation of the cooking oil and a desirable temperature gradient in the oil. The frypot 30 is also preferably provided with an upper annular rim 44 delimiting a top opening, The front wall 32 also includes a forwardly projecting portion 33, Figure 2, forming a drainboard.

Referring further to Figure 4, the frypot 30 also includes opposed outer sidewall portions 46 and 48 which are suitably secured to and extend downwardly from the respective opposed vertical sidewall portions 43 and 45 and include portions 50 and 52, respectively. The wall portions 50 and 52 are spaced from the sloping sidewall portions 41 and 42 to define chambers comprising heat exchange flow passages 54 and 56 for conducting combustion gases along the outside surfaces of the wall portions 41 and 42 in a preferred manner and including unique structure to be described further herein. The outer sidewalls 46 and 48 terminate at their lower ends at short vertically extending portions which are suitably welded to inverted channel members 58, see Figure 5 also. The channel members 58 are spaced from and are opposed to respective channel assemblies 60-62 which are suitably welded to the lower sidewalls 37 and 39, as illustrated. The channel members 58, and 60-62 define opposed aligned slots for receiving and supporting respective burner assemblies 66. The burner assemblies 66 are spaced from the opposed sidewalls 37 and 39 to define combustion chambers 68 and 70, Figure 4, which are in flow communication with the passages 54 and 56, respectively.

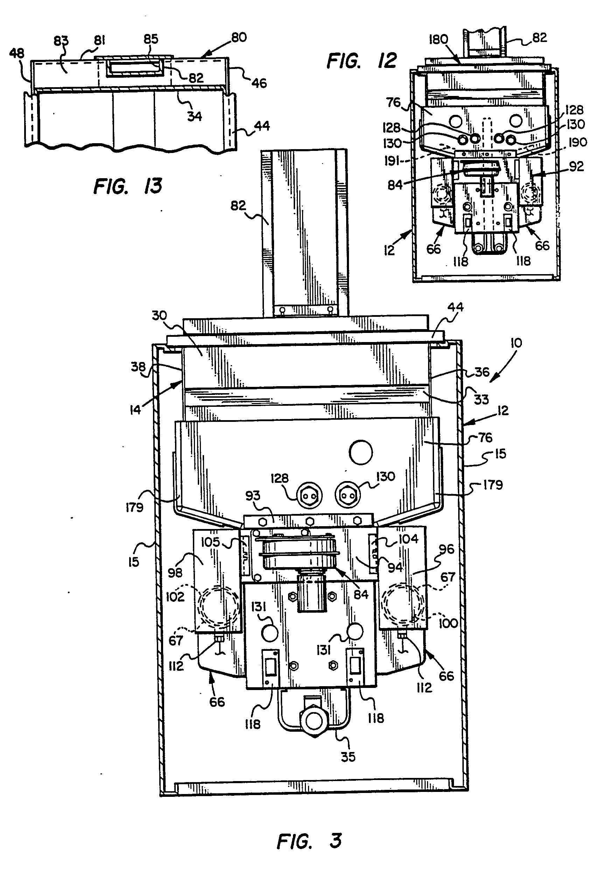

Referring to Figures 2 and 3, the frypot assembly 14 also includes an insulated composite front wall panel 76 which is suitably secured to the front wall 32 and closes and insulates the forward end of the combustion chambers 68 and 70 as well as the passages 54 and 56. The frypot assembly 14 also includes a rear insulated wall panel 78, see Figures 2 and 9, suitably secured to the rear wall 34 and closing the rear end of the combustion chambers 68 and 70. As shown in Figures 2 and 13, the outer sidewall members 46 and 48 extend rearward of the rear wall 34 in supportive relationship to an exhaust gas plenum 80 which includes a vertically extending stack or flue pipe 82 projecting upwardly therefrom. The plenum 80 comprises a somewhat pan-shaped housing having a backwall 81 and a perimeter sidewall 83 but is open toward the frypot rear wall 34. The sidewall 83 is dimensioned to slip between the walls 46 and 48 in close fitting relationship to the walls including the portions 50 and 52 and abut the rear wall 34 to form a chamber 74. Accordingly, combustion gases exit toward the rear of the frypot assembly 14 from the passages 54 and 56, are collected in the interior chamber 74 of the plenum 80 and then flow upwardly through an opening 85 in the perimeter wall 83 and through the stack 82. The stack 82 is adapted to communicate with a standard exhaust duct or flue, not shown, for conducting exhaust gases out of the room in which the fryer apparatus 10 is located.

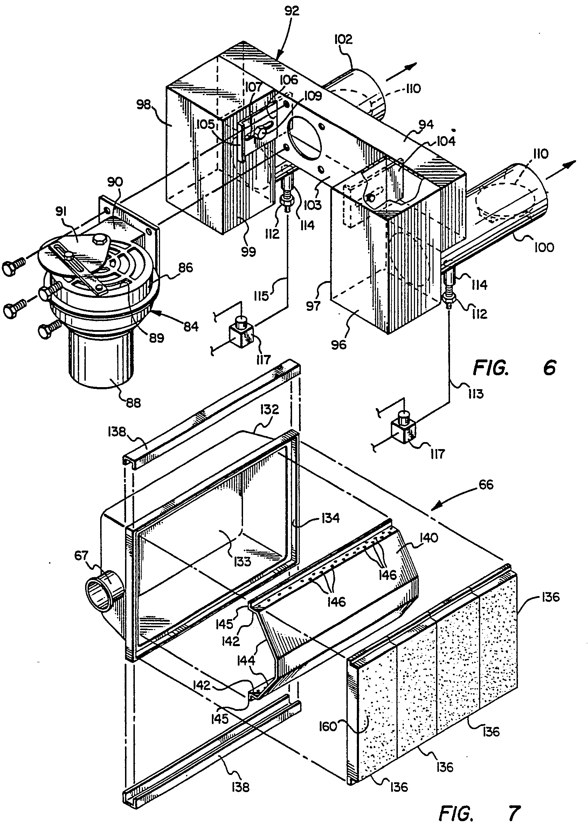

Referring again to Figures 2 and 3, and also Figure 6, combustion air for the respective burner assemblies 66 is conducted to the burner assemblies by way of a combustion air charging blower unit, generally designated by the numeral 84. The blower unit 84 includes an aerodynamic type air compressor or blower 86 coupled to a drive motor 88 and including in a housing having an inlet opening 89 and a discharge duct 90. The blower unit 84 may be of a suitable type commercially available. The blower unit 84 is mounted on conduit means including a combustion air supply manifold 92 which includes a transverse distribution duct 94 and branch ducts 96 and 98. The ducts 96 and 98 include cylindrical burner tube portions 100 and 102 which extend through collars 67 into the interior of the respective burner assemblies 66.

The air distribution duct 94 is of substantially rectangular cross-section including a front sidewall portion 103 adapted to support the blower unit 84 thereon. The branch ducts 96 and 98 are each provided with flow regulating or throttling valve means including valve gate members 104 and 105 which are characterized as platelike members having a mounting flange formed thereon, mounted on respective sidewalls 97 and 99 of the branch ducts 96 and 98 and projecting through respective slots 106, one shown in Figure 6, formed in the wall 103. As shown by way of example in Figure 6, the valve gate member 105 is supported on the duct wall 99 by a screw 109 which projects through a slot 107 in the gate member so that the gate member may be adjustably positioned to project into the interior flow passage of the distribution duct 94 just upstream of the intersection of the distribution duct with the branch duct 98. The valve gate member 104 is similarly located with respect to the duct 96. Accordingly, the gate members 104 and 105 may be adjustably positioned to project into the flow path of the charging air for the burner assemblies 66 to control the air flow to the respective burner assemblies to provide the requisite amount of combustion air. The manifold 92 includes a suitable flange 93, Figure 3, for securing the combustion air charging system to the front side of the frypot assembly 14 in front of the panel 76.

As shown in Figure 6, the blower unit 84 also includes an inlet throttling valve 91 which may be adjustably positioned to throttle inlet air flow to the blower impeller to also control the total charging air flow to the burner assemblies 66. The burner charging air system is also provided with butterfly type dampers 110, Figure 6, interposed in the burner tubes 100 and 102 to prevent convection heat transfer away from the frypot due to flow of ambient air through the combustion air charging system when the blower and the burner assemblies are not operating. The dampers 110 may be lightly spring loaded or gravity responsive butterfly type valves which permit flow through the system only under sufficient pressure as provided by operation of the blower unit 84. The dampers 110 may be disposed elsewhere in the charging system such as by providing a single damper in the blower outlet duct 90.

Referring again to Figures 2 and 6, the respective burner assemblies 66 are adapted to receive a fuel-air mixture through the respective tubes 100 and 102. The tubes 100 and 102 are each provided with a fuel injection nozzle 112 comprising a suitable fitting threaded into a boss 114 projecting down from the bottom side of the respective tubes. The nozzles 112 are suitably connected to respective fuel supply conduits 113 and 115 for conducting gaseous fuels such as natural gas, butane or propane to be injected into the interior of the tubes 100 and 102 to mix with the charging air being introduced into the respective burner assemblies 66. Each of the injection nozzles 112 includes a tip portion 111, see Figure 2 by way of example, projecting into the interior of the respective tubes 100 and 102. As shown also in Figure 3, the frypot assembly 14 is provided with suitable fuel igniter assemblies 118 which are mounted on the rear portion of composite front wall panel 76 and project into the respective combustion chambers 68 and 70. The nozzles 112 are also adapted to receive fuel from a suitable source, not shown, by way of separate control valves 117, Figure 6. The frypot assembly 14 is also provided with suitable temperature probe assemblies 128 and 130 which project into the cooking chamber 40a through the front wall 32 and are mounted in suitable bosses secured to the front wall. The frypot assembly 14 also includes transparent glass inspection ports 131 for viewing the combustion chambers 68 and 70.

Referring now to Figure 7, there is illustrated an exploded perspective view of one of the burner assemblies 66. The burner assemblies 66 are adapted to be used interchangeably on both sides of the frypot 30 by merely inverting the burner assembly when used on one side versus the other. The burner assemblies 66 each include a hollow somewhat pen shaped housing 132 having a perimeter flange 134 forming a mounting surface for a plurality of ceramic foraminous burner plates 136. The burner plates 136 are adapted to have a large number of relatively, small diameter orifices extending therethrough and opening to a combustion surface 160 for supporting a distributed somewhat planar flame front within the respective combustion chambers 68 and 70. The burner plates 136 are suitably retained on the housing 132 by opposed channel type retainer members 138. The burner assembly 66 also includes a flow distribution plate, generally designated by the numeral 140, having opposed parallel side portions 142 which are contiguous with sloping sidewalls 144. The distribution plate 140 is adapted to be supported in the interior of the housing 132 against a backwall 133 and may be welded to the backwall along opposed flange portions 145.

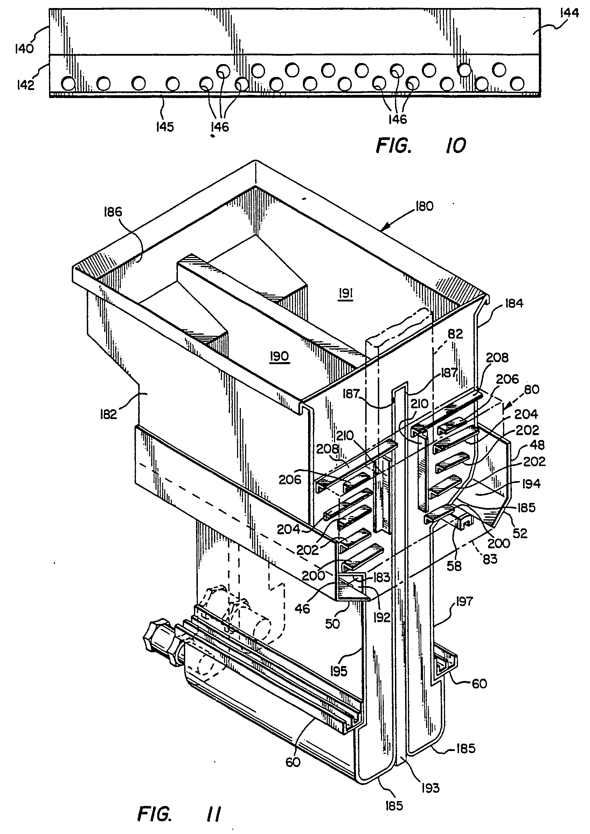

Referring also to Figure 10, the burner distribution plate 140 is shown in side elevation wherein one of the sidewall portions 142 is shown with a pattern of flow distributing ports 146 disposed therein. The ports 146 are arranged to provide for substantially uniform distribution of the flow of a fuel-air mixture entering the interior of the housing 132 from the respective burner tubes 100 or 102. As shown in Figure 2, by way of example, the burner tube 100 projects into the interior of the housing 132 from the collar 67 about sixty percent (60%) of the overall interior length of the housing. Accordingly, the array of distribution ports 146 on the sidewalls of the distribution plate are such that a fewer number of ports are disposed immediately adjacent to the outlet of the burner tube to prevent short circuiting of the flow through the burner assembly.

Referring also to Figure 4, it will be appreciated that the configuration of the distribution plate 140 for each of the burner assemblies provides for opposed interior flow chambers 148, formed between the burner plates 136 and the distribution plates 140, which are of progressively decreasing cross-sectional area toward the central portion of the combustion surface 160 when viewed in cross-section as shown in Figure 4. Thanks to the sloping sidewall portions 144 and the arrangement of the distribution ports 146, a fuel-air mixture entering the interior of the housing 132 into respective chambers 150 formed between the distribution plates 140 and the housing backwall 133 flows into the respective opposed chambers 148 through the opposed sets of distribution ports 146 and then through the foraminous burner plates 136 to the respective combustion chambers 68 and 70. The burner assemblies 66 provide for particularly thorough mixing of the fuel-air mixture entering the burner assemblies, even distribution of the fuel-air mixture to the respective combustion surfaces 160 and, accordingly, more efficient combustion of the fuel than prior art burner assemblies for frying apparatus of the type described herein.

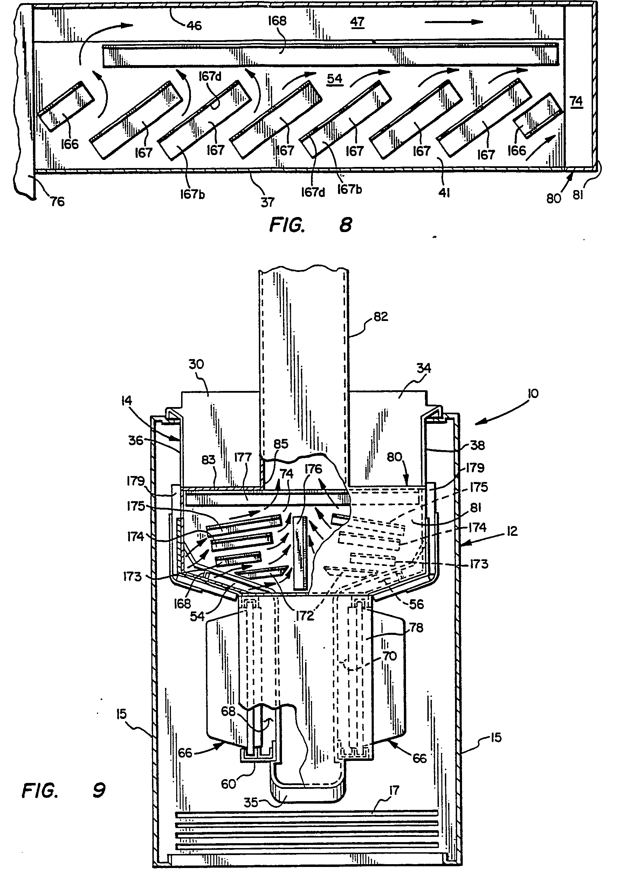

The frypot 14 also provides for more efficient heat transfer from the combustion gases generated in the combustion chambers 68 and 70 to the cooking oil contained within the interior of the frypot 30. In this regard, the heat transfer which takes place in the passages 54 and 56 and the chamber 74 formed between the plenum 80 and the rear wall of the frypot is also greater than with prior art frying apparatus of the general type described herein. Referring again to Figure 4 and also Figures 8, there is illustrated an arrangement of combined flow directing and turbulating vanes and heat transfer fins which are shown disposed on the upper sidewall portions 41 and 42. Referring to Figure 8, in particular, the upper sidewall 41 is provided with a series of somewhat L shaped platelike fins or vanes 166, 167 and 168 which are adapted to direct the flow of combustion gases upward along the sidewall 41 and along sidewall portion 47. The vanes 166 and 167 are arranged substantially parallel to each other to provide respective flow channels therebetween and are disposed at an angle of approximately 50° with respect to the planes of the frypot front and rear walls 32 and 34.

The flow of combustion gases from the chamber 68, for example, enters the passage 54 and flows between the vanes 166 and 167 and impinges on the vane 168. The vane 168 redirects the gas flow generally horizontally toward the front and rear walls of the frypot wherein approximately half of the flow entering the passage 54 is turned towards the closure formed by the front wall 76 and then reverses direction after reaching the forward edge of the vane 168 and flows towards the plenum 80 through a section of passage 54 defined generally between the vane 168, the upper sidewall portion 47 and the outer sidewall 46. The combustion gas flow entering the channels formed between the vanes 167 and 166 toward the rear of the frypot 30 are deflected by the vane 168 and flow directly toward the plenum 80.

As shown in Figure 8, each of the vanes 167 includes a base portion 167b and a flow deflecting surface 167d. The configuration of the vanes 167 is typical of the vanes 166 and 168, also. The base portions of the vanes 166, 167 and 168 are suitably spot welded to the sidewall portion 41 at spaced apart intervals. The vanes 166, 167 and 168 may also be secured to the walls of the frypot by a suitable heat conducting adhesive to enhance the heat transfer capacity of the vanes. The base portions of the vanes 166, 167 and 178 are operably contiguous with the wall surfaces of the frypot sidewalls and provide relatively large contact area for the transfer of heat to the sidewalls of the frypot itself. The vane arrangement on the sidewall portions 42 and 49 substantially identical to the arrangement illustrated in Figure 8 and comprises the mirror image of the arrangement illustrated. The vanes on the sidewall 42 are angled in the same direction, that is from the front of the frypot 30 towards the rear, at the same inclination as for the vane arrangement on the sidewall 41 and with the same configuration of vanes 166, 167 and 168.

Referring now to Figure 9, the rear wall 34 of the frypot 30 also includes an arrangement of flow directing and heat transfer vanes or fins comprising a plurality of somewhat L shaped members 172, 173, 174, 175 and 176. The vanes 172 through 175 are provided in opposed sets arranged opposite each other and inclined toward the vertical centerline of the frypot assembly 14. The vane 176 is oriented vertically and generally along the centerline to deflect the flow of combustion gases coursing through the channels between the vanes 172 through 175, generally upwardly. An elongated transverse vane or baffle 177 is also disposed across the upper edge of the chamber 74 defined by the plenum 80 and the rear wall 34 and provides an additional heat transfer surface. The configuration of the vanes 172 through 177 is substantially the same as the vanes 166 through 168 and these vanes are also secured to the rear wall 34 by suitably spaced apart spot welds. Accordingly, as the combustion gases flow from the combustion chambers 68 and 70, a substantial amount of heat exchange is obtained as the gases flow through the passages 54 and 56 and into and through the chamber 74, thanks to the configuration of the flow directing and heat transfer fins or vanes described herein.

The thermal efficiency of the frypot assembly 14 is also enhanced by the provision of the insulated front and backwall panels 76 and 78 and insulation panels 179, Figure 4, which are applied to the outer surfaces of the sidewall portions 46, 50 and 48, 52 and extend upward along parts of the sidewalls 43 and 45. Furthermore, the configuration of the burner assemblies 66 provides for maintaining a layer of combustion air between the combustion chambers 68 and 70 and the outer walls 133 of the housings 132 to further reduce heat loss from the frypot assembly 14. The combustion chambers 68 and 70 and the respective heat exchange passages located downstream of the combustion chambers, together with the flow directing and heat transfer vane arrangement disposed therein, provides for a more even distribution and transfer of heat from the combustion gases to the cooking oil within the interior chamber 40 than with prior art cooking apparatus of the general type described herein.

Referring now to Figures 11 and 12 an alternate embodiment of a frypot is illustrated and generally designated by the numeral 180. The frypot 180 is of substantially the same general shape and configuration as the frypot 30 but is shown in Figure 11 without the respective front, back and side insulation panels 76, 78 and 179 in place and without the opposed burner assemblies 66 or the charging air system. The frypot 180 may be interchanged with the frypot 30 in the apparatus 10. The frypot 180 includes sidewalls 182 and 184, opposed front and rear walls 186 and 188 which are suitably welded along their contiguous edges to form a unitary container. The frypot 180 is also provided with an inverted U shaped partition forming spaced apart intermediate vertical sidewalls 187 which divide the frypot into opposed smooth walled interior cooking oil chambers 190 and 191. The partition forming the sidewalls 187 is suitably welded to the front and rear endwalls and bottom walls of the frypot 180. An insulated partition panel 193 is adapted to be inserted in the slot formed between the intermediate side walls 187 and 188 to reduce heat transfer between the chambers 190 and 191 so that the respective chambers may be maintained at different cooking temperatures, if desired. In this regard, the frypot assembly 180 is provided with two sets of temperature probes 128 and 130, Figure 12, one set for each of the respective cooking chambers 190 and 191. The respective temperature sensors or probes 128 and 130 in both the frypots 30 and 180 are utilized in a control circuit for controlling the flow of fuel to the respective fuel nozzles 112. In the frypot 180, in particular, the burners 66 are desirably controlled substantially independently of each other.

The frypot 180 is also adapted to be provided with the exhaust plenum 80 which may be modified to have a vertically extending centrally disposed flow dividing plate, not shown, to separate the flow streams of combustion gases exiting from respective flow heat exchange passages along each side of the frypot. The frypot 180 is also provided with respective heat exchange flow passages 192 and 194 formed between opposed outer sidewall members 46, 50 and 48, 52 and respective intermediate sloping sidewall portions 183 and 185. The sidewalls 182 and 184 also include vertically extending lower sidewall portions which together with the burner assemblies 66, Figure 12, form the opposed combustion chambers 68 and 70 communicating with the passages 192 and 194, respectively. The passages 192 and 194 are provided with an array of flow directing and heat transfer vanes secured to the respective side walls portions 183 and 185 in substantially the same arrangement as previously described for the frypot 30.

However, as shown in Figure 11, the frypot rear wall 188 is modified to include a somewhat different pattern of flow directing and heat exchange vanes. The rear wall 188 includes a series of L shaped combination heat transfer fins and flow directing vanes 200, 202, 204, 206, 208 and 210. The fin or vanes 200, 202, 204, 206, 208 and 210 are also suitably welded to the rear wall 188 to maximize heat transfer from the combustion gases through the rear wall to the respective cooking chambers. The arrangement of the fins or vanes 200, 202, 204 and 206 provides for directing the flow of combustion gases across a major portion of the respective opposed sides of the rear wall on each side of the partition 193 and the vanes 210 serve as baffles to redirect the gas flow upward toward the stack 182.

From the foregoing description it will be appreciated that the configuration of the frypots 30 and 180 provide for a heat transfer· capacity and overall thermal efficiency for a fryer type cooking apparatus superior to that known in the art heretofore. The substantially sealed combustion chambers and heat exchange passages as described provided for supercharging the chamber and flow passages with a forced flow of combustion air to assure that complete combustion of the fuel is obtained. Moreover, a greater flow rate of fuel may be injected into the system to minimize warmup time and to maintain a proper cooking temperature when large cooking loads are introduced into the cooking oil. With the arrangement of the blower 84 and the distribution and charging air manifold assembly 92, whereby a balanced and proportioned flow of charging air may be introduced into each of the respective burner assemblies 66, the cooking oil may be more uniformly heated in a single frypot such as the frypot 30, and particularly, the dual chamber frypot 180 having the respective separate cooking chambers 190 and 191. Moreover, the relatively complex flow path for the combustion gases between the combustion chambers and the stack 82 maximizes the heat transfer from the combustion gases to the cooking oil to further enhance the overall thermal efficiency of the system.

The frypot assembly 14 using either the frypots 30 or 180 is also relatively easily serviced for repair or replacement of various components including the burner assemblies 66. For example, by removal of the manifold assembly 92 together with the front wall panel 76, the burner assemblies may be slid out of the grooves in their opposed support channels and then subsequently disassembled for cleaning, repair or replacement of component parts.

The construction of the frypots 30 and 180 and the associated structures are adapted to the use of conventional engineering material such as stainless or alloy steel sheet. Suitable insulation materials such as fiberglass mat or ceramic materials enclosed within a suitable shell structure may be used for the panels 179 and the end wall panels 76 and 78.

The operation of the cooking apparatus 10 with either the frypot 30 or the frypot 180 is believed to be readily apparent from the foregoing description. However, briefly, the operation of the blower 84, the igniters 118 and the control valves 117 for the respective fuel injection nozzles 112 are selectively controlled by a suitable control circuit associated with the control panel 18 and including a master on/off switch, not shown, and to the temperature sensors 128 and 130. The controls for a single frypot arrangement using a frypot 30 would normally use only one set of sensors 128 and 130. The particular arrangement of the burner assemblies 66 provides for precise control of the heat input to the opposite sides of the frypot assembly due to the arrangement of the separate air flow control valves 104 and 105 for controlling the flow of charging air to the respective combustion chambers 68 and 70 and also the separately controllable fuel injection nozzles 112 for the respective burner assemblies. Any imbalance in the heating of the cooking oil within the interior chambers of the frypots 30 or 180 can, of course, be corrected by proportioning the flow of charging air conducted through the respective manifold ducts 96 and 98 by selectively positioning the valve gate members 104 and 105, respectively. The control valves 117 can also be independently controlled to regulate fuel flow to the respective burner tubes 100 and 102.

Although preferred embodiments of the present invention have been described in detail herein, those skilled in the art will recognize that various substitutions and modifications may be made to the specific structure shown and described without departing from the scope of the present invention as recited in the appended claims.

**Claims**

1. A fryer apparatus (10) for cooking food comprising:

a frypot (14) comprising a relatively thin-walled metal container including sidewalls (36, 38), endwalls (32, 34) and a bottom wall (35) defining an interior chamber (40a, 40b) for a quantity of cooking oil;

enclosed combustion chambers (68, 70) defined in part by lower wall portions (37, 39) of said frypot;

enclosed heat exchange flow passages (54, 56) including parts of upper wall portions (41, 47, 42, 49) of said frypot for receiving combustion gases and for conducting said combustion gases toward an exhaust outlet (85); and

charging means for providing a superatmospheric charge of combustion air to said combustion chambers including an air blower (84) and conduits (94, 96, 98, 100, 102) for conducting a pressurized fuel-air mixture to said combustion chambers for combustion therein and to control heat generated and transferred to said cooking oil through said walls by maintaining a forced combustion air flow to said combustion chambers and a forced flow of combustion gases through said flow passages, characterised in that said upper wall portion is provided with a series of somewhat L-shaped plate-like fins or vanes (166, 167, 168), said vanes (166, 167) being arranged substantially parallel to each other to provide respective flow channels therebetween and all being angled from the front of the frypot towards the rear with respect to the planes of the frypot front and rear walls (32, 34), said upper wall portion further including an L-shaped vane (168) extending horizontally above said vanes (166, 167), said angled vanes and said horizontal vane being arranged to redirect approximately half of the flow issuing from said flow channels towards the front of the frypot, where its direction is reversed and it flows behind the vane (168) towards the rear exhaust outlet, and half of the flow towards the rear and also to the exhaust outlet, the combination of these guide vanes (166, 167, 168) ensuring that the turbulence and retention time of said combustion gases is increased.

2. The fryer apparatus set forth in claim 1 characterised by burner means (66), each including a housing (132) forming fuel/air mixing and distribution chambers (148, 150), each said burner assembly defining in part said combustion chambers (68, 70).

3. The fryer apparatus set forth in claim 2 characterised in that said housing (132) of said burner assemblies are disposed along sidewalls (37, 39) of said frypot, and said combustion chambers are each formed between one of said sidewalls and said housing wherein said housing forms a heat insulation barrier to minimize heat loss from said combustion chamber.

4. The fryer apparatus set forth in claim 1 characterised in that said vanes which are arranged to provide for substantially reversing the flow of at least a portion of said combustion gases flowing through said flow passages provide for multiple passes of said portions of said combustion gases along upper portions (47, 49) of said walls.

5. The fryer apparatus set forth in claim 1 characterised in that said vanes (166, 167, 168) are formed by metal plate members bent at an angle to form a vane portion (167d) and a base portion (167b) for securing said vanes to said walls along said base portion.

6. The fryer apparatus set forth in claim 1 characterised by flow passages (74) which include a part of an endwall (34) of said frypot.

7. The fryer apparatus set forth in claim 6 characterised by said flow control means including a plurality of flow directing vanes (172, 173, 174, 175, 176) secured on said endwall (34) for causing the flow of combustion gases across part of said endwall to change direction, said vanes secured to said endwall including portions contiguous with said endwall for conducting heat from said combustion gases to said cooking oil through said endwall.

8. The fryer apparatus set forth in claim 6 characterised in that the flow passages (74) is defined in part by an exhaust plenum (80) adapted to be secured to said frypot and covering part of said endwall (34).

9. The fryer apparatus set forth in claim 1 characterised by charging means including valves (104, 106) for controlling the flow of air through said combustion chambers.

10. The fryer apparatus set forth in claim 1 characterised by including dampers (100) operable to substantially prevent the flow of air through said combustion chambers when said air blower is inoperative.

11. The fryer apparatus set forth in claim 9 characterised by the flow control valves (104, 106) being interposed in said manifold between the blower and the respective combustion chambers for selectively controlling charging air flow to said combustion chambers, respectively.

12. The fryer apparatus set forth in claim 11 is characterised by fuel injection nozzles (114) interposed in conduits (100, 102) associated with said manifold and said burner means (66) for injecting fuel into combustion air flowing to respective ones of said burner means (66).

13. The fryer apparatus set forth in claim 2 characterised in that said burner means each include an inlet conduit (67) for receiving a fuel-air mixture, a foraminous burner plate (136) mounted on said housing and facing said combustion chamber, and a flow distributing plate (140) interposed in said housing between said burner plate and an inlet flow chamber (150) in said housing.

14. The fryer apparatus set forth in claim 1 characterised in that a frypot (180) includes intermediate vertical sidewalls (187) disposed between opposed sidewalls (182, 195, 184, 197) and dividing said frypot into two separate interior chambers (190, 191), each of said separate interior chambers being adapted to receive heat from combustion gases flowing through a combustion chamber and a heat exchange flow passage formed in part by an upper portion (183, 185) of a sidewall associated with said interior chamber.

15. The fryer apparatus set forth in claim 1 characterised by including insulation panels (78, 76, 179) covering at least parts of said endwalls and upper portions of said sidewalls for minimizing heat loss from said frypot.

16. A burner assembly (66) for a gas fired fryer apparatus (10) comprising:
a housing (132) forming an inlet chamber (150), said housing including an inlet conduit (67) opening into said inlet chamber for conducting a flow of a combustion air-fuel gas mixture into said inlet chamber (150); characterised by
a flow distribution plate (140) disposed in said housing (132) and dividing the interior of said housing (132) into said inlet chamber (150) and opposed distribution chambers (148), a plurality of flow distributing ports (146) formed in said distribution plate (140) for conducting said combustion air-gas mixture from said inlet chamber (150) to said distribution chambers (148); and by
a foraminous burner plate (136) closing one side of said housing (132) and forming a wall of said distribution chambers (148) for conducting said combustion air-gas mixture to a combustion chamber to support a substantially planar flame front adjacent to a heat transfer surface (37, 39) of said fryer apparatus.

17. The burner assembly set forth in claim 16 wherein said housing comprises a substantially pan shaped member including a perimeter flange (134) for supporting said burner plate, and opposed elongated channel members (138) for clamping said burner plate to said flange.

**Patentansprüche**

1. Frittiergerät (10) zum Zubereiten bzw. Frittieren von Lebensmitteln mit

einem Frittiertopf (14) mit einem relativ dünnwandigen Metallbehälter, der Seitenwände (36, 38), Stirnwände (32, 34) und eine Bodenwand (35) umfaßt, die eine innere Kammer (40a, 40b) für eine Menge Frittieröl umgrenzen;

umschlossenen Verbrennungskammern (68, 70), die teilweise durch untere Wandabschnitte (37, 39) des Frittiertopfes definiert bzw. begrenzt sind;

umschlossene Wärmeaustausch-Strömungsdurchgänge (54, 56), die Teile oberer Wandabschnitte (41, 47, 42, 49) des Frittiertopfes zur Aufnahme von Verbrennungsgasen und zur Leitung der Verbrennungsgase zu einem Abgasauslaß (85) umfassen; und

Beschickungsmittel, die eine überatmosphärische Charge an Verbrennungsluft zu den Verbrennungskammern vorsehen und ein Luftgebläse (84) und Leitungen (94, 96, 98, 100, 102) umfassen, um ein unter Druck gesetztes Brennstoff-Luft-Gemisch zu den Verbrennungskammern für eine Verbrennung darin zu führen und um die erzeugte und zu dem Frittieröl durch die Wände übertragene Wärme zu steuern, indem eine unter Druck stehende Verbrennungsluftströmung zu den Verbrennungskammern und eine unter Druck stehende Strömung von Verbrennungsgasen durch die Strömungsdurchgänge aufrechterhalten werden, dadurch gekennzeichnet, daß der obere Wandabschnitt mit einer Reihe von etwa L-förmigen, plattenähnlichen Rippen oder Schaufeln (166, 167, 168) vorgesehen ist, wobei die Schaufeln (166, 167) im wesentlichen parallel zueinander angeordnet sind, um jeweilige Strömungskanäle dazwischen vorzusehen, und wobei alle von der Vorderseite des Frittiertopfes zur Rückseite in Bezug auf die Ebenen der Frittiertopf-Vorder- und Rück-Wände (32, 34) angewinkelt bzw. winklig angeordnet sind, wobei der obere Wandabschnitt weiterhin eine L-förmige Rippe bzw. Schaufel (168) umfaßt, die sich horizontal über den Schaufeln (166, 167) erstreckt, wobei die winklig angeordneten Schaufeln und die horizontale Schaufel so angeordnet sind, daß sie etwa die Hälfte der aus den Strömungskanälen austretenden Strömung zum Frontteil bzw. zur Vorderseite des Frittiertopfes, wo deren Richtung umgekehrt wird und sie hinter der Schaufel (168) zu dem rückwärtigen Abgasauslaß strömt, und die Hälfte der Strömung zur Rückseite und ebenfalls zum Abgasauslaß umleiten, wobei die Kombination dieser Leitschaufeln (166, 167, 168) gewährleistet, daß die Turbulenz- und die Aufenthaltszeit bzw. Standzeit der Verbrennungsgase vergrößert ist.

2. Frittiergerät nach Anspruch 1, gekennzeichnet durch Brennermittel (66), von denen jedes ein Gehäuse (132) umfaßt, welches Brennstoff-Luft-Misch- und Verteilungs-Kammern (148, 150) bildet, wobei jede Brenneranordnung teilweise die Verbrennungskammern (68, 70) definiert bzw. begrenzt.

3. Frittiergerät nach Anspruch 2, dadurch gekennzeichnet, daß die Gehäuse (132) der Brenneranordnungen entlang Seitenwänden (37, 39) des Frittiertopfes angeordnet sind, und daß die Verbrennungskammern jeweils zwischen einer der Seitenwände und dem Gehäuse gebildet sind, wobei das Gehäuse eine Wärmeisolationsbarriere bildet, um den Wärmeverlust von der Verbrennungskammer auf ein Minimum herabzusetzen.

4. Frittiergerät nach Anspruch 1, dadurch gekennzeichnet, daß die Schaufeln, die angeordnet sind, um im wesentlichen eine Umkehrung der Strömung von zumindest einem Teil der Verbrennungsgase, die durch die Strömungsdurchgänge strömen, vorzusehen, Mehrfach-Durchgänge der Teile der Verbrennungsgase entlang oberen Abschnitten (47, 49) der Wände vorsehen.

5. Frittiergerät nach Anspruch 1, dadurch gekennzeichnet, daß die Schaufeln (166, 167, 168) durch Metallplattenglieder gebildet sind, die unter einem Winkel gebogen sind, um einen Schaufelabschnitt (167d) und einen Basisabschnitt (167b) für eine Befestigung der Schaufeln an den Wänden entlang dem Basisabschnitt zu bilden.

6. Frittiergerät nach Anspruch 1, gekennzeichnet durch Strömungsdurchgänge (74), welche einen Teil einer Stirnwand (34) des Frittiertopfes umfassen.

7. Frittiergerät nach Anspruch 6, gekennzeichnet durch Strömungssteuermittel mit einer Vielzahl von Strömungs-Ausrichtungs-Schaufeln (172, 173, 174, 175, 176), die an der Stirnwand (34) befestigt sind, um die Strömung der Verbrennungsgase quer über den Teil der Stirnwand für eine Änderung der Richtung zu veranlassen, wobei die an der Stirnwand befestigten Schaufeln Abschnitte umfassen, die an die Stirnwand angrenzend angeordnet sind, um Wärme von den Verbrennungsgasen zum Frittieröl durch die Stirnwand zu leiten.

8. Frittiergerät nach Anspruch 6, dadurch gekennzeichnet, daß die Strömungsdurchgänge (74) teilweise durch ein Abgas-Verteilergehäuse (80) definiert bzw. begrenzt sind, welches an dem Frittiertopf befestigt werden kann und einen Teil der Stirnwand (34) abdeckt.

9. Frittiergerät nach Anspruch 1, gekennzeichnet durch Beschickungsmittel mit Ventilen (104, 106), um die Luftströmung durch die Verbrennungskammern zu steuern.

10. Frittiergerät nach Anspruch 1, gekennzeichnet durch Dämpfungseinrichtungen bzw. Luftklappen (100), die betätigbar sind, die Strömung von Luft durch die Verbrennungskammern im wesentlichen zu verhindern, wenn das Luftgebläse nicht in Betrieb ist.

11. Frittiergerät nach Anspruch 9, dadurch gekennzeichnet, daß die Strömungssteuerventile (104, 106) in den Rohrverteiler zwischem dem Gebläse und den entsprechenden Verbrennungskammern eingesetzt sind, um Ladeluftströmung zu den Verbrennungskammern jeweils selektiv zu steuern.

12. Frittiergerät nach Anspruch 11, gekennzeichnet durch Brennstoffeinspritzdüsen (114), die in Leitungen (100, 102) eingesetzt sind, die dem Rohrverteiler und den Brennermitteln (66) zugeordnet sind zum Einspritzen von Brennstoff in Verbrennungsluft, die zu den jeweiligen Brennermitteln (66) strömt.

13. Frittiergerät nach Anspruch 2, dadurch gekennzeichnet, daß die Brennermittel jeweils eine Einlaßleitung (67) zur Aufnahme einer Brennstoff-Luft-Gemisches eine Foramin-Brennerplatte bzw. eine mit einer großen Anzahl von relativ kleinen Öffnungen versehene Brennerplatte (136), die an dem Gehäuse angebracht und zu der Verbrennungskammer gerichtet ist, und eine Strömungsverteilungsplatte (140), die in dem Gehäuse zwischen der Brennerplatte und einer Einlaßströmungskammer (150) in dem Gehäuse eingesetzt ist, umfaßt.

14. Frittiergerät nach Anspruch 1, dadurch gekennzeichnet, daß ein Frittiertopf (180) zwischeneingesetzte vertikale Seitenwände (187) umfaßt, die zwischen gegenüberliegenden Seitenwänden (182, 195, 184, 197) angeordnet sind und den Frittiertopf in zwei getrennte innere Kammern (190, 191) teilt, wobei jede der getrennten inneren Kammern geeignet ist, Wärme von den Verbrennungsgasen zu empfangen, die durch eine Verbrennungskammer und einen Wärmeaustausch-Strömungsdurchgang strömen, der teilweise durch einen oberen Abschnitt (183, 185) einer Seitenwand gebildet ist, die der inneren Kammer zugeordnet ist.

15. Frittiergerät nach Anspruch 1, gekennzeichnet durch Isolier- bzw. Trennpaneele bzw. Trennwände (78, 76, 179), die zumindest Teile der Stirnwände und oberen Abschnitte der Seitenwände abdecken, um einen Wärmeverlust aus dem Frittiertopf auf ein Minimum herabzusetzten.

16. Brenneranordnung (66) für ein mit Gas befeuertes Frittiergerät (10) mit einem Gehäuse (132), welches eine Einlaßkammer (150) bildet, wobei das Gehäuse eine Einlaßleitung (67) umfaßt, die sich in die Einlaßkammer zum Führen einer Strömung eines Verbrennungs-Luft-Brennstoff-GasGemisches in die Einlaßkammer (150) öffnet, gekennzeichnet durch eine Strömungsverteilungsplatte (140), die in dem Gehäuse (132) angeordnet ist und den Innenraum des Gehäuses (132) in die Einlaßkammer (150) und entgegengesetzte Verteilungskammern (148) teilt, wobei eine Vielzahl von Strömungsverteilungsöffnungen (146) in der Verteilungsplatte (140) ausgebildet ist, um das Verbrennungs-Luft-Gas-Gemisch aus der Einlaßkammer (150) zu den Verteilungskammern (148) zu leiten, und durch eine mit einer großen Anzahl von relativ kleinen Öffnungen versehene Brennerplatte (136), die eine Seite des Gehäuses (132) abschließt und eine Wand der Verteilungskammern (148) bildet, um das Verbrennungs-Luft-Gas-Gemisch zu einer Verbrennungskammer zu leiten, um eine im wesentlichen ebene Flammenfront angrenzend an eine Wärmeübertragungsoberfläche (37, 39) des Frittiergerätes zu unterstützen.

17. Brenneranordnung nach Anspruch 16, bei welcher das Gehäuse ein im wesentlichen pfannenförmiges Glied mit einem Umfangsflansch (134) zum Unterstützen der Brennerplatte und entgegengesetzte langgestreckte Kanalglieder (138) zum Klemmen der Brennerplatte an den Flansch umfaßt.

**Revendications**

1. Friteuse (10) pour la cuisson d'aliments, comportant:

un bac à friture (14) comprenant un récipient en métal à paroi relativement mince comportant des parois latérales (36, 38), des parois d'extrémité (32, 34) et une paroi de fond (35) définissant une chambre intérieure (40a, 40b) pour une certaine quantité d'huile de cuisson;

des chambres de combustion fermées (68, 70) définies en partie par des portions de la paroi de fond (37, 39) du dit bac à friture;

des passages d'écoulement d'échange de chaleur fermés (54, 56) comprenant des parties des portions de paroi supérieure (41, 47, 42, 49) du dit bac à friture de façon à recevoir des gaz de combustion et à conduire les dits gaz de combustion vers un orifice de sortie (85); et

des moyens d'alimentation destinés à délivrer une charge d'air de combustion à une pression supérieure à la pression atmosphérique aux dites chambres de combustion et comportant une soufflante d'air (84) et des conduits (94, 96, 98, 100, 102) de façon à conduire un mélange air-combustible sous pression vers les dites chambres de combustion afin que la combustion s'y fasse et de façon à régler la chaleur engendrée et transférée à la dite huile de cuisson par l'intermédiaire des dites parois en maintenant un écoulement d'air de combustion forcé vers les dites chambres de combustion et un écoulement forcé des gaz de combustion au travers des dits passages d'écoulement, caractérisé en ce que la dite portion de paroi supérieure est pourvue d'une série d'aubes ou d'ailettes en forme de plaque et sensiblement en L (166, 167, 168), les dites ailettes (166, 167) étant disposées sensiblement parallèles l'une à l'autre de façon à fournir des canaux d'écoulement respectifs entre elles et étant toutes inclinées de l'avant du bac à friture vers l'arrière par rapport aux plans des parois avant et arrière du bac à friture (32, 34), la dite portion de paroi supérieure comportant en outre une ailette en L (168) s'étendant horizontalement au-dessus des dites ailettes (166, 167), les dites ailettes inclinées et la dite ailette horizontale étant disposées de façon à rediriger approximativement la moitié de l'écoulement sortant des dits canaux d'écoulement vers l'avant du bac à friture, où sa direction est inversée et où il s'écoule derrière l'ailette (168) vers la sortie d'évacuation arrière, et la moitié de l'écoulement vers l'arrière et également vers la sortie d'évacuation, la combinaison de ces ailettes de guidage (166, 167, 168) assurant que la turbulence et le temps de séjour desdits gaz de combustion sont augmentés.

2. Friteuse selon la revendication 1, caractérisée par des brûleurs (66), chacun d'entre eux comportant un carter (132) formant des chambres de distribution et de mélange air/combustible (148, 150), chacun des dits ensembles de brûleur définissant en partie les dites chambres de combustion (68, 70).

3. Friteuse selon la revendication 2, caractérisée en ce que le dit carter (132) des dits ensembles de brûleur est disposé le long des parois latérales (37, 39) du dit bac à friture, et en ce que chacune desdites chambres de combustion est ménagée entre une desdites parois latérales et ledit carter, ledit carter formant une barrière d'isolation thermique de façon à minimiser la perte de chaleur de la dite chambre de combustion.

4. Friteuse selon la revendication 1, caractérisée en ce que les dites ailettes qui sont disposées de façon à assurer sensiblement l'inversion de l'écoulement d'au moins une partie des dits gaz de combustion s'écoulant au travers des dits passages d'écoulement assurent des passages multiples des dites parties des dits gaz de combustion le long des portions supérieures (47, 49) des dites parois.

5. Friteuse selon la revendication 1, caractérisée en ce que les dites ailettes (166, 167, 168) sont formées par des éléments en plaque métallique repliés suivant un certain angle de façon à former une partie d'ailette (167d) et une partie de base (167b) destinée à fixer les dites ailettes aux dites parois le long de la dite partie de base.

6. Friteuse selon la revendication 1, caractérisée par des passages d'écoulement (74) qui comprennent une partie d'une paroi d'extrémité (34) du dit bac à friture.

7. Friteuse selon la revendication 6, caractérisée en ce que les dits moyens de commande d'écoulement comportent plusieurs ailettes d'orientation d'écoulement (172, 173, 174, 175, 176) fixées à la dite paroi d'extrémité (34) afin d'amener l'écoulement des gaz de combustion au travers d'une partie de la dite paroi d'extrémité à changer de direction, les dites ailettes fixées à la dite paroi d'extrémité comportant des parties contiguës à la dite paroi d'extrémité destinées à conduire la chaleur des dits gaz de combustion vers la dite huile de cuisson en passant par la dite paroi d'extrémité.

8. Friteuse selon la revendication 6, caractérisée en ce que les passages d'écoulement (74) sont définis en partie par une chambre d'évacuation (80) prévue pour être fixée au dit bac à friture et recouvrant une partie de la dite paroi d'extrémité (34).

9. Friteuse selon la revendication 1, caractérisée en ce que les moyens d'alimentation comportent des soupapes (104, 106) destinées à commander l'écoulement de l'air au travers des dites chambres de combustion.

10. Friteuse selon la revendication 1, caractérisée en ce qu'elle comporte des tiroirs (110) pouvant fonctionner de façon à empêcher sensiblement l'écoulement de l'air au travers des dites chambres de combustion lorsque la dite soufflante n'est pas en service.

11. Friteuse selon la revendication 9, caractérisée en ce que les soupapes de commande d'écoulement (104, 106) sont interposées dans ledit collecteur entre la soufflante et les chambres de combustion respectives afin de commander sélectivement l'écoulement d'air d'alimentation vers les dites chambres de combustion respectives.

12. Friteuse selon la revendication 11, caractérisée par des gicleurs d'injection de combustible (114) interposés dans les conduits (100, 102) associés audit collecteur et aux dits brûleurs (66) de façon à injecter du combustible dans l'air de combustion s'écoulant vers le brûleur respectif (66).

13. Friteuse selon la revendication 2, caractérisée en ce que les dits brûleurs comportent chacun un conduit d'admission (67) destiné à recevoir un mélange air/combustible, une plaque de brûleur poreuse (136) montée sur le dit carter et faisant face à la dite chambre de combustion, et une plaque de distribution d'écoulement (140) interposée dans le dit carter entre la dite plaque de brûleur et une chambre d'écoulement d'admission (150) dans le dit carter.

14. Friteuse selon la revendication 1, caractérisée en ce que un bac à friture (180) comporte des parois latérales verticales intermédiaires (187) disposées entre des parois latérales opposées (182, 195, 184, 197) et divisant le dit bac à friture en deux chambres intérieures séparées (190, 191), chacune des dites chambres intérieures séparées étant prévue pour recevoir de la chaleur provenant des gaz de combustion s'écoulant au travers d'une chambre de combustion et d'un passage d'écoulement d'échange thermique formé en partie par une portion supérieure (183, 185) d'une paroi latérale associée à la dite chambre intérieure.

15. Friteuse selon la revendication 1, caractérisée en ce qu 'elle comporte des panneaux d'isolation (78, 76, 179) couvrant au moins des parties des dites parois d'extrémité et des portions supérieures des dites parois latérales afin de minimiser la perte de chaleur du dit bac à friture.

16. Ensemble de brûleur (66) pour une friteuse à gaz (10) comportant:

un carter (132) formant une chambre d'admission (150), le dit carter comportant un conduit d'admission (67) s'ouvrant dans la dite chambre d'admission de façon à conduire un écoulement d'un mélange air de combustion/gaz combustible dans la dite chambre d'admission (150);

caractérisé par une plaque de distribution d'écoulement (140) disposée dans le dit carter (132) et divisant l'intérieur du dit carter (132) en la dite chambre d'admission (150) et en chambres de distribution opposées (148), par plusieurs orifices de distribution d'écoulement (146) formés dans la dite plaque de distribution d'écoulement (140) et destinés à conduire le dit mélange air de combustion/gaz combustible de la dite chambre d'admission (150) vers les dites chambres de distribution (148); et par

une plaque de brûleur poreuse (136) fermant un côté du dit carter (132) et formant une paroi des dites chambres de distribution (148) de façon à conduire le dit mélange air de combustion/gaz combustible vers une chambre de combustion afin de supporter un front de flamme sensiblement plan adjacent à une surface de transfert de chaleur (37, 39) de la dite friteuse.

17. Ensemble de brûleur selon la revendication 16, dans lequel ledit carter comporte un élément sensiblement en forme de poêle comportant un rebord périphérique (134) destiné à supporter la dite plaque de brûleur, et des éléments allongés opposés (138) destinés à serrer la dite plaque de brûleur sur le dit rebord.

FIG. 1

FIG. 2

FIG. 12

FIG. 13

FIG. 3

FIG.    5

FIG.    4

3

FIG. 6

FIG. 7

FIG. 8

FIG. 9

FIG. 10

FIG. 11

6